# EUROPEAN PATENT SPECIFICATION

(11) **EP 3 333 551 B1**
(45) Date of publication and mention of the grant of the patent: **02.10.2019**
(21) Application number: 16203172.8
(22) Date of filing: 09.12.2016
(51) Int. Cl.: G01F 1/46, F24F 11/74, G01P 5/165, F24F 110/40

(54) **DEVICE FOR MEASURING GAS FLOW IN A DUCT**
VORRICHTUNG ZUR MESSUNG EINES GASSTROMS IN EINER LEITUNG
DISPOSITIF DE MESURE D'UN FLUX DE GAZ DANS UN CONDUIT

(43) Date of publication of application: 13.06.2018
(73) Proprietor: Lindinvent AB, 224 78 Lund (SE)
(72) Inventor: LINDBORG, Herman, 247 53 Dalby (SE)
(74) Representative: Neij & Lindberg AB

(56) References cited:
- CA-A- 1 210 610
- US-A- 4 344 330
- US-A- 4 375 769
- MCCAFFREY B J ET AL: "A robust bidirectional low-velocity probe for flame and fire application", COMBUSTION AND FLAME, ELSEVIER SCIENCE PUBLISHING CO., INC., NEW YORK, NY.; US, AMSTERDAM, NL, vol. 26, February 1976 (1976-02), pages 125-127, XP025453479, ISSN: 0010-2180, DOI: 10.1016/0010-2180(76)90062-6 [retrieved on 1976-02-01]

## Description

### Technical field

The invention relates to devices for measuring gas flows, such as air flows. More specifically, the invention pertains to the field of devices capable of measuring gas flows for the purpose of controlling a flow-throttling valve in a duct, such as in a ventilation assembly. A solution is provided which is capable of measuring low rate gas flows, suitable for energy-efficient ventilation systems, such as air ventilation systems.

### Background

In various gas transportation systems, where a gas is allowed to flow through gas ducts, the capability of measuring air flows is an important feature. The purpose may simply be to measure the flow in the duct, so as to be able to calculate a rate or amount of gas provided from a source or to a destination. For any such system, may it be employed for air, pure molecular gas such as oxygen, natural gas, toxic gas, exhaust fumes or the like, a device for measuring the gas flow is suitably included.

One field of gas transportation is air ventilation systems. Measurement of air flows in ventilation ducts is an important function for being able to regulate air consumption and comfort in any type of ventilated building, most notably in commercial buildings. Most modern real estate facilities employ variable flows for the purpose of reducing the energy requirement. With heat exchangers provided between supply air and exhaust air assemblies together with modern Variable Air Volume (VAV) systems, the energy consumption for ventilation and tempering of commercial buildings may be drastically reduced. For such systems to operate, a device for measuring the gas flow is required, which is capable of sensing and measuring very low level flows.

State of the art devices for measuring gas flow typically comprise a metal sheet with small measurement tubes on opposite sides, and when the gas flows past the sheet a pressure difference between the two sides is generated, which is proportional to the square of the air speed. In order to be able to measure the level of very low air flows, the sheet needs to block more than 20% of the cross-sectional duct area, which will generate turbulence that will generate noise.

US20070202795A1 discloses an induced flow fan assembly is provided with a pressure tap arrangement at the outlet for measuring the output flow of the assembly. The pressure sensing arrangement includes two rings of piezometers mounted to an outlet windband, one ring at the wider upstream end of the wind band and the outer at the narrower downstream end.

WO03089883 shows an averaging Pitot tube flow meter having a plurality of circumferentially spaced pitot heads extending radially inward from an inner surface of an annular cylindrical body. Each pitot head includes one or more stagnation pressure holes and a static pressure hole.

US20160091355 discloses a flow measurement probe which includes an elongate probe having an averaging pitot tube with a plurality of upstream and downstream openings arranged along a length of the elongate probe, and a thermal flow measurement sensor coupled to the elongate probe.

DE102007019231 describes a controller with has a flap blade arranged in a flow line. A difference pressure sensor measures a pressure difference between two pressure measuring points arranged in an impact area of the flap blade and determines a volume flow via the flow line.

US4344330 discloses an averaging fluid flow sensor, with a pair of tubes around the axis of a duct, each tube having multiple openings to the tube chamber the tubes being directed towards different directions. State of the art devices are generally dependent on an extended straight duct portion immediately before the device in order to provide an acceptably homogeneous flow pattern in the duct. This is often problematic, since areas in which to accommodate the ventilation system rarely provide room for such straight duct portions just before e.g. a supply valve or air damper. Bends and turns in the ventilation ducts may thus oftentimes be the source of improper flow measurement, which may cause an imbalance between supply air and exhaust air. This may in turn cause an under pressure or over pressure in the building, resulting in energy loss as air will leak through the outer shell of the building rather than being strictly controlled through the ventilation system.

### Summary

It is an object of the invention to overcome at least some of the noted deficiencies related to measurement of gas flows. It is also an object to provide a device capable of accurately measuring gas flows without requiring straight gas duct portions, while ensuring a low level of noise generation.

According to a first aspect, a device for measuring gas flow in a duct is provided, comprising
a first tube and a second tube, which tubes extend about a center axis;
each tube having a channel and being provided with a connector and a plurality of distributed input units;
each input unit including an opening into the channel and a chamber surrounding the opening, which chamber has an open end and a rear end;
wherein the open ends of the chambers on the first tube face a first direction, and the open ends of the chambers on the second tube face a second direction which is different from the first direction, wherein each tube penetrates a side wall of the chambers and runs through the chambers on that tube.

In one embodiment, the input units are evenly distributed about the axis.

In a one embodiment, each tube is provided with four input units.

In a one embodiment, said chamber is a cylinder member extending along said axis.

In a one embodiment, the input units of the first and second tube are pairwise co-located with respect to the center axis, with said rear ends facing each other.

In a one embodiment, the device comprises a cylinder member with open ends and a center wall, wherein said cylinder forms both chambers of said pairwise co-located input units.

In a one embodiment, said open ends of the chambers of the two tubes face opposite directions along said axis.

In a one embodiment, said tubes extend parallel to each other.

In a one embodiment, said opening into the channel faces a different direction than the open end of the chamber surrounding said opening, on at least one of the tubes.

In a one embodiment, each tube extends in a circular loop.

According to a second aspect, a ventilation assembly is provided, comprising
a ventilation duct;
a valve for controlling a gas flow rate through the duct; and
a device for measuring gas flow according to any of the embodiments described above, suspended in said duct.

In a one embodiment, the ventilation assembly comprises
a pressure sensor connected to said connectors for sensing a pressure difference between the first and second tubes; and
a control unit connected to the pressure sensor and configured to throttle said valve dependent on the sensed pressure difference.

In a one embodiment, said device is suspended between said valve and a duct bend about a turning axis.

In a one embodiment, each tube of said device comprises
a first pair of input units diametrically disposed parallel to said turning axis; and
a second pair of input units diametrically disposed perpendicular to said turning axis.

### Brief description of the drawings

Various aspects associated with the invention will be described below with reference to the accompanying drawings, on which
Fig. 1 schematically illustrates a general presentation of a ventilation assembly with a supply air device or terminal, situated to provide fresh air from an air duct to a room;
Fig. 2 illustrates an embodiment of a ventilation assembly as seen from a ceiling of a room;
Fig. 3 illustrates a perspective view of a portion of a device for measuring gas flow according to an example outside of the scope of the present invention;
Fig. 4 illustrates an elevated view of the device shown in Fig. 3;
Fig. 5 illustrates a perspective view of a device for measuring gas flow according to an example outside of the scope of the present invention;
Figs 6A-C schematically illustrate various variants of the examples outside of the scope of the present invention of the preceding drawings;
Fig 7 illustrates an example outside of the scope of the present invention, while figs 8-9 illustrate embodiments of a portion of a device for measuring gas flow, including a measurement input unit;
Fig. 10 illustrates a front elevated view of the portion corresponding to the embodiments of Figs 8 and 9 in accordance with an embodiment;
Fig. 11 illustrates a perspective view of a device for measuring gas flow according to an embodiment in line with Figs 9 and 10;
Fig. 12 schematically illustrates a ventilation assembly according to an embodiment;
Fig. 13 illustrates an embodiment of a ventilation assembly in accordance with Fig. 12 provided adjacent a duct bend; and
Fig. 14 illustrates a variant of the embodiment of Fig. 11, configured to operate in a ventilation system.

### Description of embodiments

The invention will now be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that, when an element is referred to as being "connected" to another element, it can be directly connected to the other element or intervening elements may be present. In contrast, when an element is referred to as being "directly connected" to another element, there are no intervening elements present. Like numbers refer to like elements throughout. Well-known functions or constructions may not be described in detail for brevity and/or clarity. Unless otherwise defined, all terms, including technical and scientific terms, used herein have the same meaning as commonly understood by one of ordinary skill in the art to which this invention belongs.

Embodiments of the invention are described herein with reference to schematic illustrations of idealized embodiments of the invention. As such, variations from the shapes and relative sizes of the illustrations as a result, for example, of manufacturing techniques and/or tolerances, are to be expected. Thus, embodiments of the invention should not be construed as limited to the particular shapes and relative sizes of regions illustrated herein but are to include deviations in shapes and/or relative sizes that result, for example, from different operational constraints and/or from manufacturing constraints. Thus, the elements illustrated in the figures are schematic in nature and their shapes are not intended to illustrate the actual shape of a region of a device and are not intended to limit the scope of the invention.

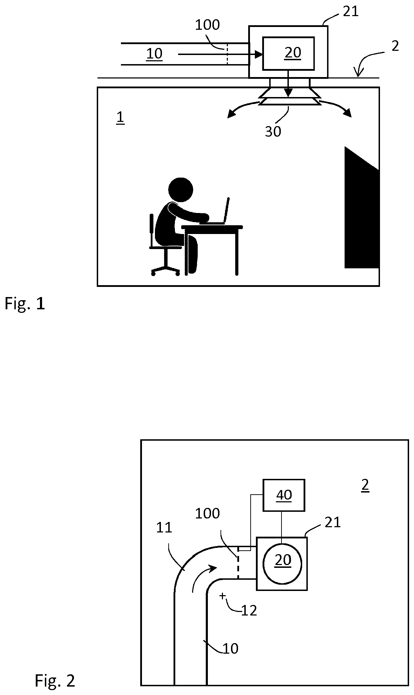

Fig. 1 presents a scene of use for various embodiments presented herein. A supply air duct 10 transports air at an elevated pressure to various rooms 1 of a building complex. In order to provide comfortable ventilation flow and temperature, an air vale in the form of a supply air device 20 is connected to the supply duct 10, for controlling at least the flow of air to the room 1 through an air outlet. The supply air device 20 may be arranged in a sealed box 21. A diffusor 30 may be connected to the supply air device 20 or the box 21, for convenient distribution of air in the room 1 through the ceiling 2. In order to at least measure the flow of air through the duct 10, a device 100 for measuring a gas flow is provided. While Fig. 1 illustrates mounting within the ceiling of a room, the device 20 may have its outlet to a wall of the room 1 in an alternative configuration.

Fig. 2 serves to illustrate the assembly of Fig. 1, as seen from the ceiling 2. In this drawing, a ventilation duct 10 leads air to a suitable position over the inner ceiling of the room 1. A valve 20 for controlling a gas flow rate through the duct 1 is provided, and a device 100 is suspended in the duct 1 for measuring gas flow before the valve. A control device 40 may comprise a pressure sensor, which is connected to the device 100 and configured to establish a measurement reflecting a flow level dependent on a gas pressure provided from the device 100. The control device may further comprise a control unit connected to the pressure sensor and configured to throttle the valve 20 dependent on sensed pressure. More detailed examples of the elements of the assembly of Fig. 2 will be outlined below.

Fig. 2 illustrates a common installation for a ventilation assembly, where air may be distributed from a ceiling diffusor 30. More specifically, the drawing illustrates a ventilation assembly wherein the device 100 for measuring a gas flow is suspended between the valve 20 and a duct bend 11 about a turning axis 12. In the illustrated embodiment, the duct bends about 90 degrees around the axis 12, but other degrees of turning are of course plausible. Furthermore, the embodiments provided herein relate to installation of the device 100 for measuring a gas flow in a ventilation duct of substantially circular cross-section. However, other shapes are possible, such as a rectangular cross-section. The duct bend shortly before the valve makes it very difficult to reliably measure the gas flow using state of the art flow meter devices. Normally an extended straight portion of one or several meters are often required in order for a flow meter to provide reliably flow measurements. With the device 100 for measuring a gas flow according to the embodiments provided herein, it is possible to accurately measure the flow immediately after a duct bend, such as within 50 cm after such a bend. This provides an improvement in the art of ventilation assembly, where accurate flow control may still be provided.

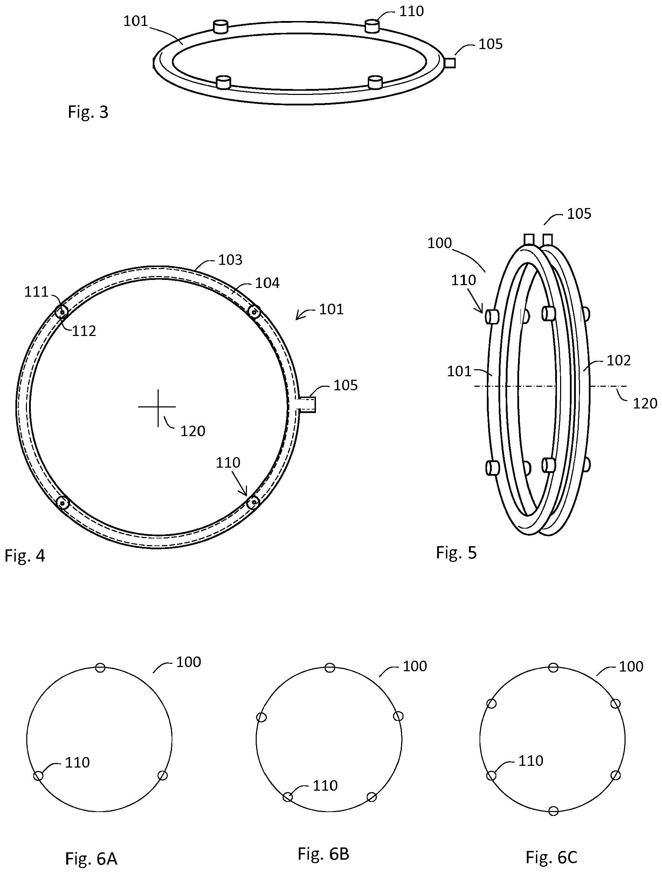

One example outside of the scope of the present invention of a device for measuring gas flow in a duct will now be described with reference to Figs 3-5, in which Figs 3 and 4 show a member for use in such an example outside of the scope of the present invention, and Fig. 5 illustrates an example outside of the scope of the present invention incorporating a pair of members in a combined arrangement. Each such member comprises a tube 101, 102, which extend around a center axis 120.

Fig. 3 illustrates a perspective view of a first tube 101, whereas Fig. 4 illustrates a cross-sectional view of the first tube 101, perpendicular to the axis 120 about which the tube 10 loops. The tube has a channel 104 formed within a side wall 103, which have a substantially circular shape. A connector 105 is formed to provide fluid connection to the channel 104 of the tube 101. In the shown example outside of the scope of the present invention, the connector 105 extends radially outwards from the tube member, but in an alternative example outside of the scope of the present invention the connector may extend in another direction, such as substantially perpendicular to the axis 120. The first tube 101 is further provided with a plurality of distributed input units 110, which may be configured to receive a gas pressure from its surroundings.

In an example outside of the scope of the present invention, each input unit 110 includes an opening 111 into the channel 104 and a chamber 112 surrounding the opening 111. The chamber 112 has an open end and a rear end, and the tube channel 104 is thus placed in communicative fluid connection with the exterior of the tube 101, via openings 111 through the open ends of the surrounding chambers 112.

A member comprising a first tube 101, and a member comprising a second tube 102 that may be configured in a corresponding manner as the first tube 101, are then placed adjacent each other, as illustrated in Fig. 5. As also indicated in Fig. 5, the first tube 101 and the second tube 102 are arranged such that the open ends of the chambers 112 on the first tube 101 face a first direction, and the open ends of the chambers 112 on the second tube 102 face a second direction which is different from the first direction. The corresponding connectors 105 may conveniently be arranged in substantially the same orientation, as illustrated, so as to alleviate connection of a pressure sensor. A pressure sensor may be connected to the connectors 105 and configured to sense a pressure difference between the first 101 and second 102 tubes. In an example outside of the scope of the present invention, the open ends 113 of the chambers 112 of the two tubes 101, 102 face opposite directions along said axis 120.

The device for measuring a gas flow as exemplified in Figs 3-5 is configured to provide an average gas pressure in each tube 101, 102, taken from a plurality of measuring points by means of the distributed input units 110. Preferably, the input units 110 are evenly distributed about the axis 120, and each tube 101, 102 should include at least 3 input units 110. The examples outside of the scope of the present invention of Figs 3-5 illustrate how each tube is provided with 4 input units. As schematically illustrated in Figs 6A to 6C, each tube may alternatively comprise 3, 5 or 6 input units. In an example outside of the scope of the present invention, the input units 110 of the first 101 and second 102 tube are pairwise co-located with respect to the center axis 120, with said rear ends facing each other. This way, each tube 101, 102 will detect an average pressure at substantially the same measuring points, in terms of angular and radial position with respect to the center axis 120. In an alternative embodiment, the input units 110 may instead be placed at different radial positions and/or different angular positions, between the first tube and the second tube 102.

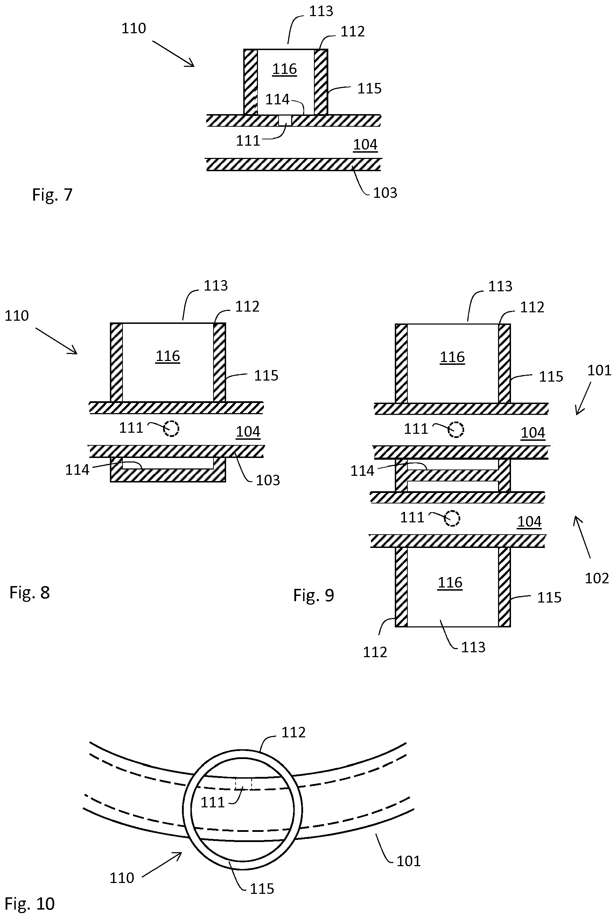

Fig. 7 schematically illustrates a cross-sectional view through a tube 101, 102 and one input unit 110, an example outside of the scope of the present invention. In this example outside of the scope of the present invention, the chamber 112 is formed by means of an envelope wall 115, extending from the tube wall 103. The envelope wall 115 may have a circular cross-section, as illustrated in Figs 1-6, or alternatively e.g. a rectangular cross-section. The tube wall 103 thus forms the rear end 114 of the chamber 112. The rear end 114 is closed to the surrounding atmosphere, whereas the opposing end 113 is open. An opening 111 is formed in the tube wall 104, placing the open cavity 116 of the chamber in communicative connection with the tube channel 104.

Fig. 8 schematically illustrates an embodiment of the invention which is an alternative to the example outside of the scope of the present invention of Fig. 7, also in a cross-sectional view through a tube 101, 102 and one input unit 110. In this embodiment, the chamber 112 is formed by means of an envelope wall 115 extending beyond the tube wall 103. Expressed differently, the tube runs through the chamber 112, penetrating its side wall 115. Also in this embodiment, the chamber wall 115 may preferably have a circular cross-section, as illustrated in Figs 1-6, or alternatively e.g. a rectangular cross-section. In this embodiment, the rear end 114 of the chamber is separate from the tube wall 103, and may be provided as an integral part of the chamber wall 115 or as a separate end wall member 114.

An opening 111 is formed in the tube wall 104, placing the open cavity 116 of the chamber 112 in communicative connection with the tube channel 104. The opening in the tube wall 103 may be provided centrally, i.e. aligned with the open chamber end 113, as in Fig. 7. Alternatively, the opening 111 may be provided at an angle to the chamber 112, as shown in Fig. 8. In such an embodiment, the opening 111 in the tube 101, 102 may be open in a direction which is different, e.g. perpendicular, to the direction of the open end 113 of the chamber 112. Such an embodiment has the additional advantage that it may be more resistant to collection of dust or other pollution, risking to block the opening 111. In one embodiment, the openings 111 in the tube wall 103 may be arranged perpendicularly to the open ends 113 of the chambers 112 on the input units 110 of the first tube which is configured to be placed upstream in a ventilation duct. In the input units of the second tube 102, which is then configured to be placed downstream in a duct, the openings 111 in the tube wall 103 may either be arranged perpendicularly to the open ends 113 of the chambers 112 on the input units as in Fig. 8, or aligned with the open ends 113 of the chambers 112, similar to the orientation of Fig. 7.

Fig. 9 illustrates an embodiment in which a common body is employed for the chambers 112 of adjacent input units 110 of the first 101 and second 102 tubes, respectively. The common body may comprise a cylinder member with open ends 113 and a center wall 114, wherein said cylinder forms both chambers 112 of said pairwise co-located input units. The center wall 114 may be a fixed wall formed in the cylinder, or a separate wall element placed in the cylinder between the two tubes 101 and 102. This arrangement has the further benefit of automatically orienting and placing the input units 110 of the paired tubes 101 and 102 correctly.

Fig. 10 schematically illustrates a view of an input unit as seen over the first tube 101, in a direction parallel to the center axis 120 about which the tube 101 loops. In this drawing, which may be consistent with Figs 8 or 9, it is shown that the tube 101, and tube 102 where applicable, extend through a circular side wall 115 of the chamber 112. This may be accomplished by simply pulling the tube 101 through holes of a diameter corresponding to the outer diameter of the tube 101, for snug fitting. In an alternative example outside of the scope of the present invention, a seal may be provided at the interface to the tube 101 in the holes in the side wall 155, e.g. by means of a rubber O-ring or an adhesive. The opening 11 to the channel 104 of the tube 101 is illustrated in a direction which is perpendicular to the direction of the open end 113 of the chamber 112, as in Figs 8 and 9. Alternatively, the opening 111 may e.g. be oriented in the same way as the open end 113 of the chamber 112, i.e. substantially concentrically with the cylindric cross-section of the chamber wall 115.

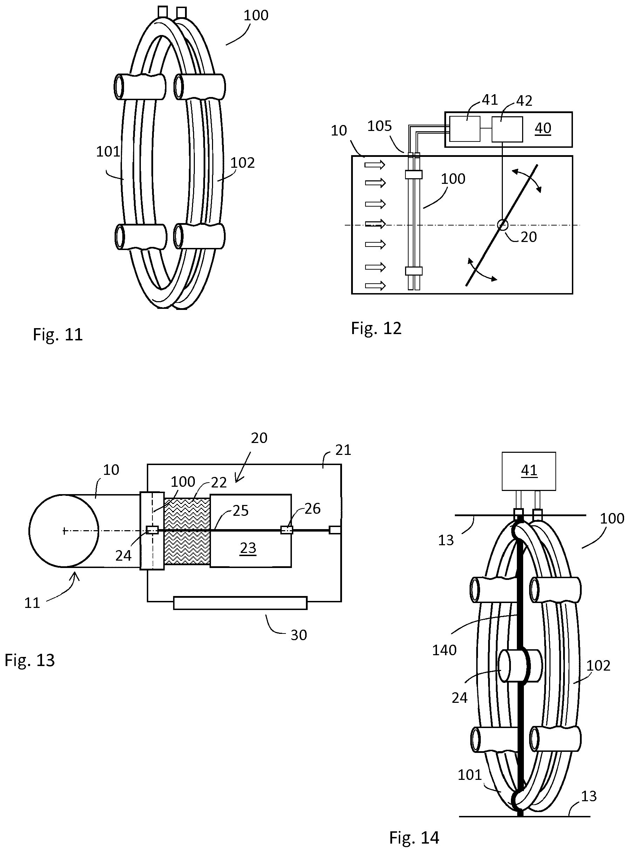

Fig. 11 illustrates an embodiment, similar to that of Fig. 5, wherein said tubes 101, 102 extend parallel to each other. The drawings illustrate embodiments in which each tube extends in a substantially circular loop, but other shapes may be employed. In the embodiment of Fig. 11, specifically, pairwise co-located input units 110 of the first 101 and second 102 tube, respectively, are provided by means of a common pipe-shaped cylinder forming the chamber walls 115 of those input units, e.g. as provided in Fig. 9.

Fig. 12 schematically illustrates a ventilation assembly following the principle drawing of Fig. 2. A valve 20 is provided for controlling a gas flow rate in a ventilation duct 10. In order to properly control the gas flow, a device 100 for measuring gas flow is provided in the duct, preferably upstream of the valve 20. The device 100 may be configured in accordance with any of the embodiments presented herein, and is thus provided with a pair of connectors 105 to the tube channels 103 of adjacently placed tubes 101 and 102. A control device 40 may be provided, which includes a pressure sensor 41, connected to said connectors 105 for sensing a pressure difference between the first 101 and second 102 tubes. As gas flows past the device 100, a positive pressure will rise within the chambers 112 facing upstream on the first tube 101, whereas typically a negative pressure will be caused in within the chambers 112 facing downstream on the second tube 102. In each tube 101 and 102, respectively, an average gas pressure of the gas in the chambers 112 of the input units 110 on the respective tube will be established. By measuring the difference between the gas pressure as established in the two tubes 101, 102, using the pressure sensor 41, a very accurate reading of the flow through the duct can be obtained.

The control device 40 may further include a control unit 42 connected to the pressure sensor 41 and configured to throttle the valve 20 dependent on the sensed pressure difference. This may be accomplished by means of e.g. a step motor connected to a throttle member, in a well-known manner according to the state of the art.

Fig. 13 illustrates an embodiment of a ventilation assembly, e.g. in accordance with Fig. 2, where it is also made clear that the device 100 for measuring the gas flow through a duct 10 is placed closely between a duct bend 11 and a valve 20. In such a scenario, it has been found that optimum accuracy in the flow rate measurement has been obtained when the each tube of the device 100 is arranged with a first pair of input units 110 diametrically disposed parallel to the turning axis 12 of the duct bend 11, and a second pair of input units 110 diametrically disposed perpendicular to said turning axis 12.

In the embodiment shown in Fig. 13, the valve 20 may comprise an inner tube 22 configured to pass gas from the duct into the box 21 and further out through a distributer 30. Throttling may be obtained by selectively decreasing the size of the exposed surface of the inner tube 22, by covering it with an outer tube 23. The outer tube may be displaced along the inner tube 22 e.g. be means of a motor 24, turning a long screw 25 about a nut 26 in the outer tube 23. The motor 24, which may be under control of a control unit 42 of a control device 41, as exemplified in Fig. 12, may in this embodiment be suspended centrally at the device 100 for measuring the gas flow.

Fig. 14 illustrates an embodiment, which may be used in the assembly embodiment of Fig. 13. In such an embodiment, the ventilation assembly comprises a suspension device 140 for suspending a motor 24 for setting a throttle position of a valve 20. The motor 24 is preferably suspended at the center axis 120 of the device 100 for measuring a gas flow. The suspension device 140 may be configured to suspend both the device 100 and the motor 24, as exemplified in the drawing, by means of a bracket or similar, connected to a duct wall 13.

A device 100 configured in accordance with the invention, e.g. as shown in the exemplary embodiments, is capable of providing accurate flow readings even at very low flows. Test have shown that for various embodiments, accurate measurement of air flows of down to the range of 2-4 l/s can be obtained. In addition, test have shown that accurate flow rate measurements can be obtained even when the device 100 is suspended centrally in a duct within 50 cm after a duct bend 11.

In one embodiment, the device 100 is suspended in the duct 10 such that the input units 110 are evenly distributed around its center axis 120, which substantially coincides with a center axis of the duct 10. The device 100 may be configured to operate in a duct 10 of a predetermined inner diameter D, wherein the device has input units 110 are located on a tube 101, 102 with a diameter d, where d may be 3-6 cm smaller than D, or even 4-5 mm smaller. In one embodiment, the input units 110 may be pairwise arranged for the first 101 and second tube 102 by means of a common chamber 112, wherein each such pair is diametrically arranged with a corresponding pair of input units 110, with respect to the center axis 120. This may be true specifically for a device 100 embodiment having an even number of input units 110 on each tube 101, 102. For large ducts, the device 100 may be configured with more than four input units 110 per tube.

Each tube 101, 102 may e.g. be a hose of nylon or other plastic material, or a metal such as aluminum, and may have an outer diameter of 3-10 mm, such as 4-8, e.g. 6 mm, and an outer diameter of 2-8 mm, such as 3-6 mm, e.g. 4 mm. The opening 111 in each input unit may be 0.5-3 mm, e.g. 1-2 mm. The chambers 112 may be formed with plastic walls, e.g. from a pipe of PVC, nylon or other plastic, or a metal, with a 10-20 mm outer diameter, such as 16 mm.

An embodiment of the device 100 such as shown e.g. in Fig. 11 is configured to sense an average total pressure at the input units 110 of the upstream-facing first tube 101. The device 100 is further configured to sense an average total pressure at the input units 110 of the downstream-facing second tube 102, for which a certain dynamic under pressure may be obtained. The embodiment with pipe-shaped input unit chambers 112 has been tested and found to generate very little sound.

Various embodiments and examples outside the scope of the invention have been presented and discussed above. It has also been made clear that features of those embodiments may be combined, where not contradicting. In addition, other embodiment falling within the scope of the appended claims will be conceivable based on the teachings of this disclosure.

## Claims

1. Device (100) for measuring gas flow in a duct (10), comprising
a first tube (101) and a second tube (102), which tubes extend around a center axis (120);
each tube having a channel (104) and being provided with a connector (105) and a plurality of distributed input units (110);
each input unit including an opening (111) into the channel,
**characterized in that** each input unit includes a chamber (112) surrounding the opening, which chamber has an open end (113) and a closed rear end (114);
wherein the open ends (113) of the chambers on the first tube (101) face a first direction, and the open ends of the chambers on the second tube (102) face a second direction which is different from the first direction; and
wherein each tube penetrates a side wall of the chambers and runs through the chambers (112) on that tube.

2. The device of claim 1, wherein the input units are evenly distributed about the axis.

3. The device of any preceding claim, wherein each tube is provided with four input units.

4. The device of any preceding claim, wherein said chamber is a cylinder member extending along said axis.

5. The device of any preceding claim, wherein the input units of the first and second tube are pairwise co-located with respect to the center axis, with said rear ends facing each other.

6. The device of claim 5, comprising a cylinder member with open ends and a center wall (114), wherein said cylinder forms both chambers of said pairwise co-located input units.

7. The device of any preceding claim, wherein said open ends of the chambers of the two tubes (101, 102) face opposite directions along said axis.

8. The device of any preceding claim, wherein said tubes extend parallel to each other.

9. The device of any preceding claim, wherein said opening (111) into the channel faces a different direction than the open end (113) of the chamber surrounding said opening, on at least one of the tubes (101, 102).

10. The device of any preceding claim, wherein each tube extends in a circular loop.

11. Ventilation assembly comprising
a ventilation duct (10);
a valve (20) for controlling a gas flow rate through the duct; and
a device (100) for measuring gas flow according to any of the preceding claims, suspended in said duct.

12. The ventilation assembly of claim 11, comprising
a pressure sensor (41) connected to said connectors (105) for sensing a pressure difference between the first and second tubes (101, 102); and
a control unit (42) connected to the pressure sensor and configured to throttle said valve dependent on the sensed pressure difference.

13. The ventilation assembly of claim 11 or 12, wherein said device (100) is suspended between said valve (20) and a duct bend (11) about a turning axis (12).

14. The ventilation assembly of claim 13, wherein each tube of said device comprises
a first pair of input units diametrically disposed parallel to said turning axis; and
a second pair of input units diametrically disposed perpendicular to said turning axis.

## Patentansprüche

1. Vorrichtung (100) zum Messen eines Gasstroms in einer Leitung (10), Folgendes umfassend
ein erstes Rohr (101) und ein zweites Rohr (102), wobei sich die Rohre um eine Mittenachse (120) herum erstrecken;
wobei jedes Rohr einen Kanal (104) aufweist und mit einem Verbinder (105) und mehreren verteilten Eingangseinheiten (110) versehen ist;
wobei jede Eingangseinheit eine Öffnung (111) in den Kanal umfasst,
**dadurch gekennzeichnet, dass** jede Eingangseinheit eine Kammer (112) umfasst, welche die Öffnung umgibt, wobei die Kammer ein offenes Ende (113) und ein geschlossenes hinteres Ende (114) aufweist;
wobei die offenen Enden (113) der Kammern auf dem ersten Rohr (101) in eine erste Richtung weisen und die offenen Enden der Kammern auf dem zweiten Rohr (102) in eine zweite Richtung weisen, die von der ersten Richtung verschieden ist; und
wobei jedes Rohr eine Seitenwand der Kammern durchdringt und durch die Kammern (112) auf diesem Rohr verläuft.

2. Vorrichtung nach Anspruch 1, wobei die Eingangseinheiten gleichmäßig um die Achse herum verteilt sind.

3. Vorrichtung nach einem der vorhergehenden Ansprüche, wobei jedes Rohr mit vier Eingangseinheiten versehen ist.

4. Vorrichtung nach einem der vorhergehenden Ansprüche, wobei die Kammer ein Zylinderglied ist, das sich entlang der Achse erstreckt.

5. Vorrichtung nach einem der vorhergehenden Ansprüche, wobei die Eingangseinheiten des ersten und des zweiten Rohrs hinsichtlich der Mittenachse paarweise zusammen angeordnet sind, wobei sich die hinteren Enden einander gegenüber stehen.

6. Vorrichtung nach Anspruch 5, ein Zylinderglied mit offenen Enden und einer Mittenwand (114) umfassend, wobei der Zylinder beide Kammern der paarweise zusammen angeordneten Eingangseinheiten ausbildet.

7. Vorrichtung nach einem der vorhergehenden Ansprüche, wobei die offenen Enden der Kammern der beiden Rohre (101, 102) in entgegengesetzte Richtungen entlang der Achse weisen.

8. Vorrichtung nach einem der vorhergehenden Ansprüche, wobei sich die Rohre parallel zueinander erstrecken.

9. Vorrichtung nach einem der vorhergehenden Ansprüche, wobei die Öffnung (111) von mindestens einem der Rohre (101, 102) in den Kanal in eine Richtung weist, die von der des offenen Endes (113) der Kammer, welche die Öffnung umgibt, verschieden ist.

10. Vorrichtung nach einem der vorhergehenden Ansprüche, wobei sich jedes Rohr in einer kreisförmigen Schleife erstreckt.

11. Belüftungsanordnung, Folgendes umfassend
eine Belüftungsleitung (10);
ein Ventil (20) zum Steuern einer Gasstromrate durch die Leitung; und
eine Vorrichtung (100) zum Messen eines Gasstroms nach einem der vorhergehenden Ansprüche, die in der Leitung aufgehängt ist.

12. Belüftungsanordnung nach Anspruch 11, Folgendes umfassend
einen Drucksensor (41), der mit den Verbindern (105) zum Messen einer Druckdifferenz zwischen dem ersten und dem zweiten Rohr (101, 102) verbunden ist; und
eine Steuerungseinheit (42), die mit dem Drucksensor verbunden ist und eingerichtet ist, das Ventil abhängig von der gemessenen Druckdifferenz zu drosseln.

13. Belüftungsanordnung nach Anspruch 11 oder 12, wobei die Vorrichtung (100) zwischen dem Ventil (20) und einer Leitungsbiegung (11) um eine Drehachse (12) herum aufgehängt ist.

14. Belüftungsanordnung nach Anspruch 13, wobei jedes Rohr der Vorrichtung Folgendes umfasst
ein erstes Paar Eingangseinheiten, die parallel zu der Drehachse diametral angeordnet sind; und
ein zweites Paar Eingangseinheiten, die senkrecht zu der Drehachse diametral angeordnet sind.

## Revendications

1. Dispositif (100) pour mesurer un débit de gaz dans une conduite (10), comprenant
un premier tube (101) et un second tube (102), lesquels tubes s'étendent autour d'un axe central (120) ;
chaque tube ayant un canal (104) et étant pourvu d'un raccord (105) et d'une pluralité d'unités d'entrée distribuées (110) ;
chaque unité d'entrée incluant une ouverture (111) dans le canal,
**caractérisé en ce que** chaque unité d'entrée inclut une chambre (112) entourant l'ouverture, laquelle chambre a une extrémité ouverte (113) et une extrémité arrière fermée (114) ;
dans lequel les extrémités ouvertes (113) des chambres sur le premier tube (101) font face à une première direction, et les extrémités ouvertes des chambres sur le second tube (102) font face à une seconde direction qui est différente de la première direction ; et
dans lequel chaque tube pénètre dans une paroi latérale des chambres et passe à travers les chambres (112) sur ce tube.

2. Dispositif selon la revendication 1, dans lequel les unités d'entrée sont uniformément distribuées autour de l'axe.

3. Dispositif selon une quelconque revendication précédente, dans lequel chaque tube est pourvu de quatre unités d'entrée.

4. Dispositif selon une quelconque revendication précédente, dans lequel ladite chambre est un élément cylindrique s'étendant le long dudit axe.

5. Dispositif selon une quelconque revendication précédente, dans lequel les unités d'entrée des premier et second tubes sont co-situées en paire par rapport à l'axe central, lesdites extrémités arrière se faisant face.

6. Dispositif selon la revendication 5, comprenant un élément cylindrique avec des extrémité ouvertes et une paroi centrale (114), dans lequel ledit cylindre forme les deux chambres desdites unités d'entrée co-situées en paire.

7. Dispositif selon une quelconque revendication précédente, dans lequel lesdites extrémités ouvertes des chambres des deux tubes (101, 102) font face à des directions opposée le long dudit axe.

8. Dispositif selon une quelconque revendication précédente, dans lequel lesdits tubes s'étendent parallèlement l'un à l'autre.

9. Dispositif selon une quelconque revendication précédente, dans lequel ladite ouverture (111) dans le canal fait face à une direction différente de celle de l'extrémité ouverte (113) de la chambre entourant ladite ouverture, sur au moins un des tubes (101, 102).

10. Dispositif selon une quelconque revendication précédente, dans lequel chaque tube s'étend en une boucle circulaire.

11. Ensemble de ventilation, comprenant
une conduite de ventilation (10) ;
une soupape (20) pour commander un débit de gaz à travers la conduite ; et
un dispositif (100) pour mesurer un débit de gaz selon l'une quelconque des revendications précédentes, suspendu dans ladite conduite.

12. Ensemble de ventilation selon la revendication 11, comprenant
un capteur de pression (41) raccordé auxdits raccords (105) pour détecter une différence de pression entre les premier et second tubes (101, 102) ; et
une unité de commande (42) connectée au capteur de pression et configurée pour étrangler ladite soupape en fonction de la différence de pression détectée.

13. Ensemble de ventilation selon la revendication 11 ou 12, dans lequel ledit dispositif (100) est suspendu entre ladite soupape (20) et un coude de conduite (11) autour d'un axe de rotation (12).

14. Ensemble de ventilation selon la revendication 13, dans lequel chaque tube dudit dispositif comprend
une première paire d'unités d'entrée diamétralement disposée de façon parallèle audit axe de rotation ; et
une seconde paire d'unités d'entrée diamétralement disposée de façon perpendiculaire audit axe de rotation.
